(19) Europäisches Patentamt
European Patent Office
Office européen des brevets

(11) Publication number: 0 007 761
B1

(12) # EUROPEAN PATENT SPECIFICATION

(45) Date of publication of patent specification: 18.01.84

(21) Application number: 79301403.6

(22) Date of filing: 16.07.79

(51) Int. Cl.3: C 07 C 43/205, C 07 C 43/215, C 07 C 69/353, C 07 C 69/527, C 08 K 5/04, C 08 K 5/55

(54) **Cumylphenol derivatives and their use in synthetic resin compositions.**

(30) Priority: 20.07.78 US 926267

(43) Date of publication of application: 06.02.80 Bulletin 80/3

(45) Publication of the grant of the patent: 18.01.84 Bulletin 84/3

(84) Designated Contracting States: BE CH DE FR GB IT LU NL

(56) References cited: FR - A - 2 353 593

(73) Proprietor: KENRICH PETROCHEMICALS, INC.
Foot of East 22nd Street
Bayonne, New Jersey 07002 (US)

(72) Inventor: Monte, Salvatore J.
399 Buchanan Avenue
Staten Island Richmond, New York 10314 (US)
Inventor: Sugerman, Gerald
8 Cambridge Drive
Allendale Bergen, New Jersey 07401 (US)

(74) Representative: Harrison, Michael Robert et al,
URQUHART-DYKES & LORD 11th Floor Tower
House Merrion Way
Leeds LS2 8PB West Yorkshire (GB)

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 007 761 B1

Courier Press, Leamington Spa, England.

Cumylphenol derivatives and their use in synthetic resin compositions

This invention relates to cumylphenol derivatives and their use as additives in resin compositions.

Cumylphenol and certain of its derivatives have been described in the prior art. See particularly Tsivunin *et al., Biol. Akliv. Soldin.* 1968, 172—5 (Russ.). Finding a use for such materials has been particularly desirable since they are readily available as by-products from commercial processes such as the making of phenol from cumene.

Similarly, it has long been desired to improve the properties of polymeric material and reactive diluents, plasticizers and impact modifiers which serve such functions at low costs have long been sought. Though numerous materials are known to satisfy these needs, they are frequently deficient because of their costs or because of incompatibility with the particular polymer.

French Patent Specification No. 2353593 describes certain cumylphenol derivatives, including alkyl, aralkyl, aryl and glycidly esters, and their use as additives for polymeric materials, more particularly as accelerators, reactive diluents and plasticisers.

The invention concerns derivatives of cumylphenol and their use in polymeric materials. More specifically, the invention describes alkenyl, monocarboxylic acid esters of cumylphenol; polycarboxylic acid esters of cumylphenol; inorganic borate esters of cumylphenyl; and alkenyl and aralkyl ethers of cumylphenol. These materials are useful as reactive diluents in epoxy, phenolic, and urethane compounds; effective as plasticizers in polyvinyl chloride, polystyrene and urethane; and useful as impact modifiers in styrene-acrylonitrile, polystyrene, phenolic and polyvinyl chloride resins. Additionally, the borate ester has flame retardant properties. While not each and every cumylphenol derivative is effective in all of the aforesaid applications, these compounds all exhibit useful properties within certain of the aforesaid fields.

Cumylphenol and derivatives thereof have been found useful as reactive diluents for a variety of resins, *e.g.,* epoxy, furan, phenolic, urethane, polyester and acrylate resins. The alkenyl esters are useful in polyesters and acrylates. These compounds are new compositions of matter and provide a low cost replacement for conventionally employed co-monomeric materials. In certain instances, their use improves the chemical and physical properties of the cured resins.

In still another embodiment of the invention, it has been found that esters of cumylphenol are useful as non-reactive plasticizers for polyurethanes. Here again the cost of the finished resin may be markedly reduced.

In a further embodiment of the invention, the borate, and glutarate esters and the benzyl and allyl ethers of cumylphenol have been found to be useful impact modifiers for polystyrene, styrene-acrylonitrile, phenolic and vinyl chloride resins.

The derivatives of cumylphenol which are useful in the invention may be represented by the following formula:

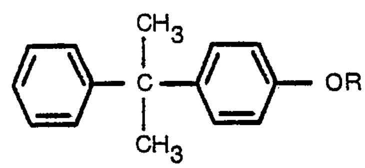

wherein R is an acyl group, having the formula

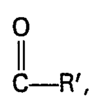,

an alkenyl group having from 3 to 12 carbon atoms, or an aralkyl group having from 7 to 12 carbon atoms; and wherein the R′ above is an alkenyl group having 2 to 12 carbon atoms.

When R is alkenyl, the preferred radicals are allyl and methallyl; and when it is aralkyl, the preferred radical is benzyl. Most preferably, R′ is a vinyl or isopropenyl group.

Still another group of derivatives are the cumylphenol esters of polyfunctional acids. The compounds are based on both organic polycarboxylic acids and boric acid. These derivatives may be readily prepared by reacting, for each mole of acid, a number of moles of cumylphenol equal to the functionality of the acid. The organic acids have two or three carboxylic acid groups and may have from 2 to 8 additional carbon groups per molecule. For instance the acid may be an organic dicarboxylic acid having from 4 to 8 carbon atoms per molecule. The organic acids may be saturated or unsaturated, aliphatic or aromatic. Most preferred is the derivative of glutaric acid, *i.e.,* dicumylphenyl glutarate. Other compounds include the derivatives of cinnamic acid, crotonic acid, sorbic acid, phthalic acid, isophthalic acid, terephthalic acid, maleic acid, succinic acid, fumaric acid. Half esters of these acids may also be used, in which case only sufficient cumylphenol is reacted to combine with the unesterified carboxyl group.

Where the cumylphenol derivatives are used as reactive diluents, they may be present in from 10 to 200 parts per 100 parts of the resin, preferably from 20 to 50 parts.

In non-reactive plasticizer applications, from 15 to 60 wt.%, preferably from 20 to 40 wt.%, of the appropriate ester of the cumylphenol is used based on total weight of resin.

As an impact modifier, from 0.5 to 30 wt.%, preferably from 1 to 10, of the cumylphenol derivative should be used for each part of the resin in question.

In the applications of the invention where the cumylphenols are used as reactive diluents or non-reactive plasticizers, the cumylphenol compound is initially blended with the appropriate resin along with other desired components. The blend is fed to the polymerizing reactor and the resin polymerized in accordance with known techniques for the particular resin.

The resins which are cured and formed in the practice of the invention include those generically referred to as "liquid thermoset resins." By this term is meant resins which are in the liquid state under conditions of application and include casting resins, *i.e.,* liquid monomer or incompletly polymerized polymers, usually containing catalysts or curing agents, capable of becoming hard after they are cast in molds; and coating resins, *i.e.,* liquid monomers or incompletely polymerized polymers, optionally in a solvent or non-solvent extender, which are capable of application by casting, potting, brushing, rolling, spraying or dipping. These include paints, varnishers, enamels, lacquers, and casting and potting resins.

Of these resins, those of particular interest in the instant invention are furans, phenolics and urethanes. These may briefly be described as follows:

The furan resins are thermosetting resins obtained primarily by the condensation polymerization of furfural alcohol in the presence of a strong acid, sometimes in combination with formaldehyde or furfural. The term "furan resins" also includes resins made by condensing phenol with furfuryl alcohol or furfural, and furfuryl-ketone polymers.

Phenolic resins are a family of thermoset resins made by the reaction of phenols with aldehydes such as formaldehyde, acetaldehyde, or furfural in the presence of either acidic or basic catalysts. For casting, B-stage resins are generally used. Examples of the phenols are di- and trivalent phenols such as cresol, resorcinol and cardanol. In casting resin applications, a large excess of formaldehyde is generally used with sodium hydroxide as the catalyst. The reaction is usually carried out at about 64°C.

The polyurethanes are a family of resins produced by reacting diisocyanates with organic compounds containing two or more active atoms to form polymers having free isocyanate groups. A detailed description of these resins is given in U.S. Patent 3,060,137, issued October 23, 1962. These groups, under the influence of heat or catalyst, will react with each other or with water, glycols, etc., to form thermosetting materials.

Rigid polyvinyl chloride resins optionally contain extenders, pigments, stabilizers and a small proportion of plasticizers wherein the proportion of plasticizer is insufficient to reduce tensile modulus below $1.4 \times 10^7$ $N/M^2$ (2,000 psi).

Polystyrene resins are thermoplastic resins prepared by the polymerization of high purity styrene, generally in the presence of free radical producing catalysts. They may be made by any of the conventional polymerization methods.

Styrene-acrylonitrile polymers are readily prepared by copolymerizing styrene and acrylonitrile in the presence of a free radical catalyst. See Teach, W. C., *et al.,* "Polystyrene", Plastics Application Series, Reinhold Publishing Corp., New York, 1960.

The following examples show specific embodiments of the invention:

## Example A

*Preparation of Cumylphenyl Benzyl Ether*

The cumylphenyl benzyl ether was prepared as follows: a 3-liter flask equipped with a mechanical stirrer, thermometer, addition funnel, and external heating and cooling devices was charged sequentially with 1 liter of benzene, 1 liter of 4.5 wt.% aqueous sodium hydroxide and 1 mole of cumylphenyl. The cumylphenol salt dispersion formed after mixing was cooled to 10—15°C., mixed and maintained at 10—15°C. during the addition of 1.1 moles of benzyl chloride over a four hour period. After the addition of the benzyl chloride, the reaction mix was refluxed for two hours. The two phases which formed were separated and the water phase discarded. The organic phase was washed three times with cold water and the residual organic material fractionated. The yield of the benzyl ether was 74 mole% and the product had a boiling point of 218 to 221°C. at 133.3 Pa (1 mm Hg).

The cumylphenyl benzyl ether has the following properties:

| | |
|---|---|
| Appearance: Waxy Solid/Heavy Liquid | |
| Specific Gravity | 1.04 |
| Viscosity at 93°C $10^{-3}$ Pa.s (cps) | $25 \pm 5$ |
| Flash point (COC), Min., °C. | 176 |

| | |
|---|---|
| Vapor Pressure Pa (mm Hg), Max. 93°C. | 133.3 (1) |
| Pour Point, Max. °C. (supercools easily) | 66 |
| Minimum Assay by gas chromatograph (GC)% | 85 |

This compound is useful as an impact modifier for styrene resins, e.g., ABS and SAN, polyphenylene oxide and polyphenylene sulfide. It is also effective in making cellulose compatible with styrenic resins and styrenic resins compatible with nylon and polyester.

Example B

*Preparation of Cumylphenyl Allyl Ether*

The apparatus and procedure of Example A was used to prepare the allyl ether, except that allyl chloride was used in place of the benzyl chloride. A yield of 84 mole% was obtained. The allyl ether had a boiling point of 186° to 190°C. at 133.3 Pa (1 mm Hg).

The cumylphenyl allyl ether has the following properties:

Appearance: Moderate Viscosity Yellow Liquid

| | |
|---|---|
| Specific Gravity | 1.02 |
| Viscosity at 24°C., $10^{-3}$ Pa.s (cps) | 130 ± 15 |
| Flash Point (COC), Min. °C. | 93 |
| Vapor Pressure at 24°C., Pa (mm Hg.) Max. | 133.3 (1) |
| Pour Point, Max. °C. | −18 |
| Min. Assay by GC, % | 85 |

This compound is useful as a reactive diluent for unsaturated polyesters and as a peroxide reactive plasticizer for vinyls and ink applications.

Example C

*Preparation of Tri(cumyl phenyl) Borate*

This ester was prepared by refluxing for two hours equal molar amounts of cumylphenol with tri-n-butyl borate. About 93% of by-product butanol was then recovered by fractionation. The residue boiled at over 150°C. at 133.3 Pa (1 mm Hg). Elemental analysis showed a boron content of 1.7%, substantially the same as the calculated value.

The tri(cumyl phenyl) borate has the following properties:

Appearance: White-tan crystalline solid

| | |
|---|---|
| Specific Gravity | 1.10 |
| Viscosity at 150°C (cps) | 70 ± 10 |
| Flash Point (COC), °C., Min. | 316 |
| Acid Number, Meq./100 g. Max. | 0.5 |
| Melting Range, °C | 96—109 |

This compound is useful as a flame retardant in resins and as a plasticizer for cellulose ethers and esters.

Example D

*Preparation of Dicumylphenyl Glutarate*

This compound was prepared by reacting 1 mole of dimethyl glutarate with 2 moles of cumylphenyl acetate in the presence of 0.5 wt.% of sulfuric acid as catalyst. During the reaction, acetic acid was distilled overhead until the bottoms product boiled over 150°C. at 1 mm Hg. Thereafter, the product was neutralized with calcium carbonate, filtered and recrystallized from toluene. The product obtained was a hard, white, waxy solid. The yield was 83% of theory.

The dicumylphenyl glutarate has the following properties:

| | |
|---|---|
| Appearance: Hard White Wax | |
| Specific Gravity | 1.13 |
| Viscosity at 176°C., $10^{-3}$ Pa.s (cps) | 140 ± 15 |
| Flash Point (COC), Min. °C. | 371 |
| Vapor Pressure (mm Hg), Max. 93°C. | 1 |
| Melting Range, °C. | 121—138 |
| Acid Number, Meq./100 g Max. | 0.5 |

This compound is useful as a process aid in polyacrylate and polyacrylonitrile extrusion and molding operations.

Example E

*Preparation of Cumylphenyl Acrylate*

Cumylphenyl acrylate was prepared in the apparatus described in Example A. One mole of cumylphenol and 2 moles of calcium carbonate were slurried in the presence of 1 liter of toluene solvent. During a period of 2 hours, one mole of acryl chloride was added to the solution while the temperature was maintained at 40 to 50°C. The reaction mixture was filtered and the filtrate distilled at 5 mm Hg. to produce a pale yellow oil boiling at 198 to 203°C. The yield was 84%. Gas chromatographic assay indicated that less than 3% of unreacted cumyl phenyl was retained in the product.

The cumylphenyl acrylate has the following properties:

| | |
|---|---|
| Appearance: Pale Yellow Oil | |
| Specific Gravity | 1.07 |
| Viscosity at 24°C., $10^{-3}$ Pa.s (cps) | 105 ± 10 |
| Flash Point (COC), min. °C. | 150 |
| Vapor Pressure at 24°C., Pa (mm Hg) | 133.3 (1) |
| Acid Number, Meq. 1100 g. Max. | 0.5 |
| Pour Point, Max. °C. | —18 |

This compound is useful as a co-monomer in peroxide cured acrylates, polyesters and alkyl resin formulations. It also imparts greater impact strength and higher curing rates as compared with conventional co-monomers, e.g., phenyl acrylate.

Example F

*Preparation of Cumylphenyl Methacrylate*

The methacrylate ester was prepared by the procedure described in Example E, except that methacryl chloride was used in place of acryl chloride. The yield was 84%.

The cumylphenyl methacrylate has the following properties:

| | |
|---|---|
| Appearance: Pale Yellow Oil | |
| Specific Gravity | 1.06 |
| Viscosity at 24°C., $10^{-3}$ Pa.s (cps) | 110 ± 15 |
| Flash Point (COC), Min. °C. | 149 |
| Boiling Range, °C. at 5 mm | 213—222 |
| Acid Number, Meq./100 g. max. | 0.5 |
| Pour Point, Max °C. | —8 |

This compound is useful for the same application as the cumylphenyl acrylate. It is often superior, however, in enhancing impact strength, but it does not as effectively enhance the cure rate.

Example 1

In this example an acrylonitrile-styrene copolymer (Bakelite RMD 4420, a trademark of Union Carbide Corp.) was admixed with 3 parts per 100 parts by weight of the cumylphenol derivative shown in the table below. The elongation, tensile strength, and notched Izod impact strength obtained in each case was compared with the acrylonitrile composition control.

TABLE I

| Additive | Elongation, % | N/M² | Tensile Strength (psi) | J/M | Notched Izod Impact Strength (ft.lb./in.) |
|---|---|---|---|---|---|
| None | 2.3 | $7\times10^7$ | (10,000) | 2.45 | (0.45) |
| Cumylphenyl borate | 2.8 | $9.45\times10^7$ | (13,500) | 3.27 | (0.60) |
| Cumylphenyl glutarate | 3.2 | $7.35\times10^7$ | (10,500) | 3.27 | (0.60) |
| Cumylphenyl benzyl ether | 7.4 | $8.96\times10^7$ | (12,800) | 4.90 | (0.90) |

The above table shows that each of the cumylphenol derivatives evaluated increased the elongation, tensile strength and impact strength of the acrylontrile-styrene copolymer. The benzyl ether was the most effective in enhancing elongation while the borate ester improved the tensile strength by about 35%. Impact strength was improved in all cases with the greatest increase being shown with the benzyl ether.

Example 2

In this example, 100 parts of polystyrene (Dylene, a trademark of Arco Chemical Company) were admixed in a drum tumbler with 2 parts of the cumylphenol derivative shown in the following table. Input samples were prepared by profile extrusion at 88°C (190°F) in a non-vented Hartig extruder using a general purpose mixing screw, L/D ratio of 24:1.

The following Table shows the results obtained:

TABLE II

| Additive | Ultimate Elongation, % | N/M² | Tensile Strength (psi) | J/M | Notched Izod Impact Strength (ft.lb./in.) |
|---|---|---|---|---|---|
| None | 1.8 | $4.7\times10^7$ | (6,700) | 1.91 | (0.35) |
| Cumylphenyl benzyl ether | 5.2 | $6.0\times10^7$ | (8,600) | 4.36 | (0.80) |
| Cumylphenyl allyl ether | 3.1 | $5.18\times10^7$ | (7,400) | 3.00 | (0.55) |

The above table clearly shows that the elongation, tensile strength, and notched impact strengh are improved by the addition of the cumylphenol derivatives. The benzyl ether is the most outstanding in improving the physical properties.

Example 3

In this example, the effect of the cumylphenol derivatives on the tensile and impact strength of

unfilled phenolic resin is shown. The resin used was a Bakelite Resin 2620 (trademark of Union Carbide Corp.). For each 100 parts of resin, 3 parts of additive (shown in the table below) along with 0.2 parts of p-toluenesulfonic acid were admixed in a high shear Cowles (Trade Mark) mixer at 15 to 21°C (60° to 70°F). The material was thereafter cast into test specimens, 6″ × $\frac{1}{4}$″ × $\frac{1}{4}$″, in a Teflon (Trade Mark) coated steel mold and cured at 65°C (150°F) for 2 hours.

TABLE III

| Additive | J/M | Notched Izod Impact (ft.lb./in.) | Tensile Strength, (psi) N/M² |
|---|---|---|---|
| None | 3.00 | (0.55) | (7,200) 5.04 × 107 |
| Cumylphenol borate | 3.38 | (0.62) | (8,900) 6.23 × 107 |
| Cumylphenyl benzyl ether | 5.72 | (1.05) | (7,400) 5.18 × 107 |

Example 4

In this example, 100 parts of an unfilled polyvinyl chloride resin Bakelite (QSAP-7 (a trademark of Union Carbide Corp.) was compounded at a temperature of 65°C (150°F) in a twin screw Anger extruder (L/D=24:1) with 2 parts of microcrystalline wax, 1 part of calcium sterarate, 1 part of lead diphthalate, and 3 parts of the cumylphenol derivative shown in the following table. The extruder has a PVC screw and X-alloy coated barrel. Prior to extrusion the components were blended in a Wellex high shear mixer. Test samples were profile extruded at a temperature of 65°C (150°F) into $\frac{1}{4}$″ square rods and cut into pieces 6″ long.

The following results were obtained:

TABLE IV

| Additive | J/M | Notched Izod Impact (ft.lb./in.) | Tensile Strength, (psi) N/M² |
|---|---|---|---|
| None | 3.60 | (0.65) | (5,800) 4.06 × $10^7$ |
| Cumylphenyl borate | 4.63 | (0.85) | (5,900) 4.72 × $10^7$ |
| Cumylphenyl benzyl ether | 6.27 | (1.15) | (7,400) 5.18 × $10^7$ |
| Dicumylphenyl glutarate | 5.72 | (1.05) | (7,200) 5.04 × $10^7$ |

The above table shows that the cumylphenol derivatives improved the notched Izod impact without lessening the tensile strength of the unfilled polyvinyl chloride. The benzyl ether and the glutarate ester were particularly outstanding since not only did they result in the greatest improvement in impact strength, but they also gave the greatest improvement in tensile strength. These additives did not affect the clarity of the polyvinyl chloride, though the material became a light tan color.

**Claims**

1. A cumylphenol derivative characterised in that the derivative is (A) a compound of the formula

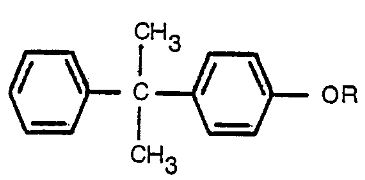

wherein R is an acyl group having the formula

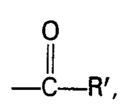

an alkenyl group having from 3 to 12 carbon atoms or an aralkyl group having from 7 to 12 carbon atoms, and R' is an alkenyl group having 2 to 12 carbon atoms, (B) an ester derivative of an organic polycarboxylic acid wherein the acid has 2 or 3 carboxylic acid groups; or (C) an ester derivative of boric acid.

2. A cumylphenol derivative according to claim 1 characterised in that R is an acyl group and R' is a vinyl group or an isopropenyl group.

3. A cumylphenol derivative according to claim 1 characterised in that R is an allyl, methallyl or benzyl group.

4. A cumylphenol derivative according to claim 1 characterised in that the polycarboxylic acid is an organic dicarboxylic acid having from 4 to 8 carbon atoms per molecule.

5. A cumylphenol derivative according to claim 4 characterised in that the dicarboxylic acid is unsaturated or aromatic.

6. A cumylphenol derivative according to claim 4 characterised in that the dicarboxylic acid is glutaric acid.

7. A resin composition characterised in that it contains from 10 to 200 parts by weight of a cumylphenol derivative as claimed in any of the preceding claims per 100 parts by weight of the resin.

8. A composition according to claim 7 characterised in that the resin is polyvinyl chloride, polystyrene or a copolymer of acrylonitrile and styrene.

9. A resin composition characterised in that it contains from 15 to 60 weight percent of a cumylphenol derivative based on the weight of said resin, the cumylphenol derivative being an ester as claimed in any of claims 1, 2 and 4 to 6.

10. A resin composition characterised in that it contains from 0.5 to 30 weight percent of a cumylphenol derivative based on the weight of said resin the cumylphenol derivative being a borate, glutarate ester or a benzyl or allyl ether as claimed in any of claims 1 to 6.

11. A composition according to claim 10 characterised in that the resin is an unfilled phenolic resin.

**Revendications**

1. Dérivé de cumylphénol caractérisé en ce que ledit dérivé est (A) un composé de la formule:

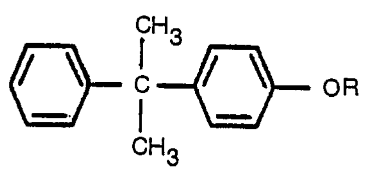

dans laquelle R est un groupe acyle ayant la formule

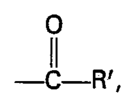

un groupe alcényle ayant de 3 à 12 atomes de carbone ou un groupe aralcoyle ayant de 7 à 12 atomes de carbone et R' est un groupe alcényle ayant de 2 à 12 atomes de carbone; (B) un dérivé ester d'un acide organique polycarboxylique dans lequel l'acide a deux ou trois groupes d'acide carboxylique: ou (C) un dérivé ester de l'acide borique.

2. Dérivé de cumylphénol selon la revendication 1, caractérisé en ce que R est un groupe acyle et R' est un groupe vinyle ou un groupe isopropényle.

3. Dérivé de cumylphénol selon la revendication 1, caractérisé en que R est un groupe allyle, méthallyle ou benzyle.

4. Dérivé de cumylphénol selon la revendication 1, caractérisé en ce que l'acide polycarboxylique est un acide organique dicarboxylique ayant de 4 à 8 atomes de carbone par molécule.

5. Dérivé de cumylphénol selon la revendication 1, caractérisé en ce que l'acide dicarboxylique est insaturé ou aromatique.

6. Dérivé de cumylphénol selon la revendication 4, caractérisé en ce que l'acide dicarboxylique est l'acide glutarique.

7. Composition de résine, caractérisée en ce qu'elle contient de 10 à 200 parties en poids d'un dérivé de cumylphénol tel que revendiqué selon l'une quelconque des revendications précédentes pour 100 parties en poids de la résine.

8. Composition selon la revendication 7, caractérisée en ce que la résine est du chlorure de polyvinyle, du polystyrène ou un copolymère d'acrylonitrile et de styrène.

9. Composition de résine, caractérisée en ce qu'elle contient de 15 à 60% en poids d'un dérivé de cumylphénol basé sur le poids de ladite résine, le dérivé de cumylphénol étant un ester tel que

revendiqué selon l'une qualconque des revendications 1, 2 et 4 à 6.

10. Composition de résine, caractérisée en ce qu'elle contient de 0,5 à 30% en poids d'un dérivé de cumylphénol basé sur le poids de ladite résine, le dérivé de cumylphénol étant un borate, un ester de glutarate ou un éther de benzyle ou d'allyle tel que revendiqué selon l'une quelconque des revendications 1 à 6.

11. Composition selon la revendication 10, caractérisée en ce que la résine est une résine phénolique non chargée.

**Patentansprüche**

1. Cumylphenolderivat, dadurch gekennzeichnet, daß das Derivat

(A) eine Verbindung der Formel:

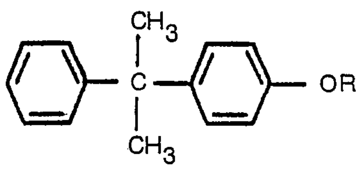

worin R eine Acylgruppe mit der Formel

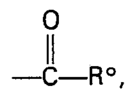

eine Alkenylgruppe mit 3 bis 12 Kohlenstoffatomen oder eine Aralkylgruppe mit 7 bis 12 Kohlenstoffatomen ist und R' eine Alkenylgruppe mit 2 bis 12 Kohlenstoffatomen ist.

(B) ein Esterderivat einer organischen Polycarbonsäure, die 2 oder 3 Carboxylgruppen enthält, oder

(C) ein Esterderivat der Borsäure ist.

2. Cumylphenolderivat nach Anspruch 1, dadurch gekennzeichnet, daß R eine Acylgruppe ist und R' eine Vinylgruppe oder eine Isopropenylgruppe ist.

3. Cumylphenolderivat nach Anspruch 1, dadurch gekennzeichnet, daß R eine Allyl-, Methallyl- oder Benzylgruppe ist.

4. Cumylphenolderivat nach Anspruch 1, dadurch gekennzeichnet, daß die Polycarbonsäure eine organische Dicarbonsäure ist, die pro Molekül 4 bis 8 Kohlenstoffatome enthält.

5. Cumylphenolderivat nach Anspruch 4, dadurch gekennzeichnet, daß die Dicarbonsäure ungesättigt oder aromatisch ist.

6. Cumylphenolderivat nach Anspruch 4, dadurch gekennzeichnet, daß die Dicarbonsäure Glutarsäure ist.

7. Harzmasse, dadurch gekennzeichnet, daß sie pro 100 Gewichtsteile des Harzes 10 bis 200 Gewichtsteile eines Cumylphenolderivats nach einem der vorhergehenden Ansprüche enthält.

8. Masse nach Anspruch 7, dadurch gekennzeichnet, daß das Harz Polyvinylchlorid, Polystyrol oder ein Copolymer von Acrylnitril und Styrol ist.

9. Harzmasse, dadurch gekennzeichnet, daß sie 15 bis 60 Gew.-%, auf das Gewicht des Harzes bezogen, eines Cumylphenolderivats enthält, wobei das Cumylphenolderivat ein Ester nach einem der Ansprüche 1, 2 und 4 bis 6 ist.

10. Harzmasse, dadurch gekennzeichnet, daß sie 0,5 bis 30 Gew.-%, auf das Gewicht des Harzes bezogen, eines Cumylphenolderivats enthält, wobei das Cumylphenolderivat ein Borat, ein Glutaratester oder ein Benzyl- oder Allyl-ether nach einem der Ansprüche 1 bis 6 ist.

11. Masse nach Anspruch 10, dadurch gekennzeichnet, daß das Harz ein füllstofffreies Phenolharz ist.